# EUROPEAN PATENT APPLICATION

(11) **EP 1 858 130 A2**
(43) Date of publication of application: **21.11.2007**
(21) Application number: 07108495.8
(22) Date of filing: 18.05.2007
(51) Int. Cl.: H02G 3/32

(54) **Part mounting clamp**

(30) Priority: 18.05.2006 US 435884
(71) Applicant: HellermannTyton Co., Ltd., Tokyo 1500012 (JP)
(72) Inventor: Takagaki, Toshiaki c/o HellermannTyton Co., Ltd., Himeji-shi Hyogo (JP)
(74) Representative: Fleuchaus, Michael A.

(57) **Abstract**

The invention provides a part mounting clamp in which an engaging piece is reliably and sufficiently engaged with a mounting hole peripheral portion by conventional general inserting operation even under a condition where a burr exists on amounting hole of an attaching subj ect, and excellent attached state can be obtained. To this end, in an insertion-engagement type attaching clamp, the engaging step 9 includes a vertical wall 9t abutting against an inner peripheral surface 3n of the mounting hole 3 of the sheet metal panel 2, and a lateral wall 9y extending along an outer surface 2A of the mounting hole peripheral portion 2a of the sheet metal panel 2. The engaging step 9 is formed such that in an attached state, a contained angle between the lateral wall 9y and the outer surface 2Abecomes 5°.

## Description

### Background of the Invention

### 1. Field of the invention

The present invention relates to a part mounting clamp used for attaching a wire harness or a part such as a band for tying wire harness to an attaching subject such as a metal panel of an automobile body.

### 2. Explanation of Related Art

Apart mounting clamp of this kind is generally configured in the following manner. That is, a part mounting clamp includes a support portion which covers a peripheral portion of a mounting hole formed in an attaching subject in a state where the support portion has a part mounting portion, a column which projects from the support portion and is inserted into the mounting hole, and a pair of engaging pieces which extend toward the support portion in a state where the engaging pieces are supported respectively by both sides of a lower end of the column in a cantilever manner, and also, on outer sides of an upper end of which engaging steps are formed, wherein the engaging steps can engage with a peripheral portion of the mounting hole. When the column is inserted into themountinghole, the pair of engaging pieces are resiliently rocked and deformed inward by slide contact with an inner periphery of the mounting hole, and the engaging step is engaged with the peripheral portion of the mounting hole of the attaching subject, thereby obtaining an attached state wherein the pair of engaging pieces and the support portion sandwich the attaching subject.

As such a part mounting clamp, there are known clamps as disclosed in Japanese Patent Applications Laying-open No. 2001-336509 and No. 2000-270447. In a part mounting clamp disclosed in Japanese Patent Application Laying-open No. 2001-336509, a part mounting portion of a support portion is a holding portion (reference number 3) of cables. The part mounting clamp includes a support portion (reference number 11) having a pair of left and right resiliently supporting pieces (reference number 67), and a pair of engaging pieces (reference number 63) which are supported respectively by left and right sides of a lower end of a column (reference number 61) in a cantilever manner. A peripheral portion of a mounting hole is engaged with an engaging step (reference number 65) by inserting operation into the mounting hole of an attaching subject such as a metal plate (not shown).

In a part mounting clamp disclosed in Japanese Patent ApplicationLaying-openNo. 2000-270447, apartmountingportion of a support portion is a band (reference number 1) for tying wire harness. The part mounting clamp includes a support portion (reference number 3) having a pair of left and right pressing pieces (reference number 7), and a pair of engaging pieces (reference number 6b) supported respectively on left and right sides of a lower end of a column (reference number 6) in a cantilever manner. As shown in Fig. 3 of this patent document, a peripheral portion (reference number 4a) of a mounting hole (reference number 4) is engaged with an engaging step (reference number 6d) by inserting operation of an attaching subject (no reference number) such as a metal plate into the mounting hole.

In a part mounting clamp disclosed in any of the above publications, as shown in Figs. 4 to 6 of Japanese Patent Application Laying-open No. 2000-270447, the pair of engaging pieces are resiliently deformed inward as the column is inserted into the mounting hole, the engaging pieces pass through the mounting hole, and the engaging step is automatically engaged with the peripheral portion of the mounting hole by the outward resilience of the engaging piece. In such a case, the engaging step of the part mounting clamp includes a vertical wall extending along an inner peripheral surface of the mounting hole, and a lateral wall extending along an outer surface of a peripheral portion of the mounting hole. In a mounting state on the mounting hole, a contained angle between the vertical wall and the lateral wall is set to 90° so that it comes in contact with both an inner peripheral surface of the mounting hole and an outer surface of the peripheral portion so as to be stably clamped.

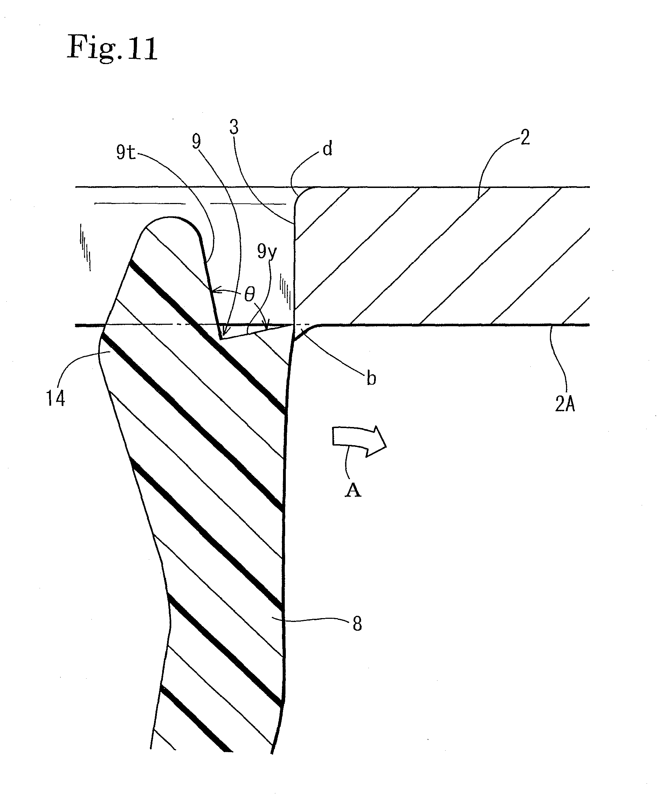

In a conventional part mounting clamp, however, when it is inserted into a mounting hole of a sheet metal panel for an automobile or the like and is attached, it can not be properly attached in some cases. This is because in a case of a sheet metal member, since a mounting hole is also formed by press forming, "a flaggy portion" is generated on an edge of the mounting hole on the press punch entering side, and "a burr" is generated on the opposite side in many cases. That is, as shown in Fig. 11, a flaggy portion d is a phenomenon in which an edge of a mounting hole 3 is plastically deformed in an angle round form, and a burr b is a phenomenon in which a fine metal piece (metal wall) projects. These phenomena are ascribable to precision of a press forming machine, but they are ordinary generated in a sheet metal member in different degrees.

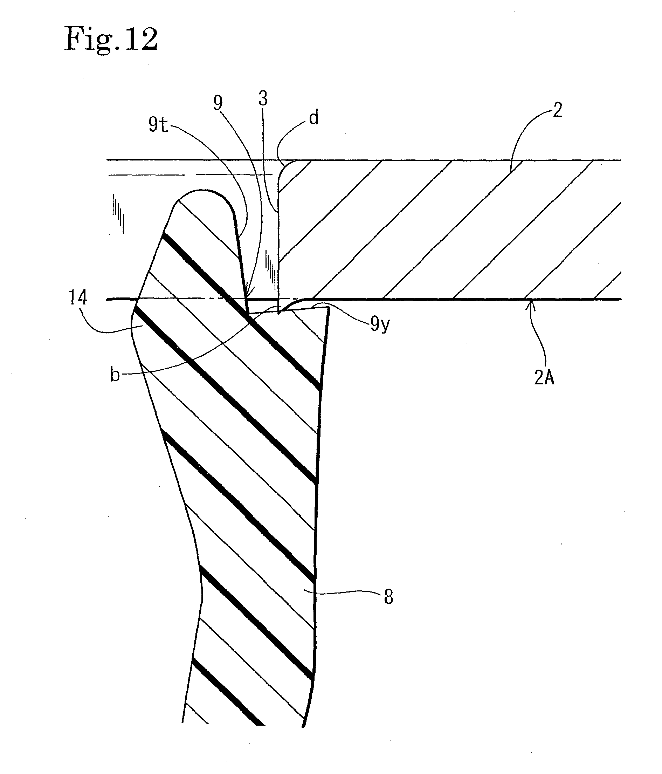

When a "flaggy portion" exists on the side of the sheet metal member where the engaging piece is engaged, predetermined clamping can be carried out, but a problem occurs when a burr b appears on an angle edge of the mounting hole 3 of the sheet metal member 2 on the side where the engaging piece 8 is engaged as shown in Fig. 11. That is, in a structure in which the opening angle θ of the engaging step 9 is set to 90°, the engaging piece 8 is rocked and deformed inward immediately before the engaging step 9 is engaged with the mounting hole 3, and a front portion of the lateral wall 9y is upwardly inclined with respect to a lower outer surface 2A of the sheet metal member 2. Therefore, if a burr b is formed on a lower edge of the mounting hole 3, even when the tip end of the lateral wall 9y assumes a position where the tip end can slide in (position where the tip end of the lateral wall 9y is located on a phantom line which is a set plate thickness in Fig. 11), it is hindered by the burr b and it can not smoothly rock and move such as to spread laterally in a direction of arrow A by the resilience of the engaging piece 8. Therefore, there is inconvenience that it collides with the burr b and can not be engaged, or as shown in Fig. 12, since the tip end of the burr b is sharply pointed, the lateral wall 9y is caught in a tip end of the burr b and engaged improperly, and engaged length is short to be easily disengaged.

According to the structure of the part mounting clamp, when the material is synthetic resin or the like, the support portion can be resiliently deformed in the vertical direction to some extent, thereby it is possible to forcibly engage the engaging step 9 with the mounting hole 3 by strongly inserting the engaging step 9 and wrapping the lateral wall 9y below the burr b. However, this operation is slightly deviated from a normal inserting operation of intentionally pushing strongly (operation that requires an unpredictable strong force. Thus, in a practical producing line, the above-described engagement failure often occurs due to insufficient inserting force or the like.

### Summary of the Invention

In view of the above circumstances, it is an object of the invention, by revising mainly the structure of the engaging piece, to provide a part mounting clamp in which an engaging piece is strongly and sufficiently engaged with a peripheral portion of a mounting hole so that an excellent attached state canbe obtained by a conventional and general inserting operation even under such a condition that a burr exists on a mounting hole of an attaching subject.

The present invention provides a part mounting clamp comprising
a column 7 inserted into a mounting hole 3 formed in an attaching subject 2,
a support portion 6 which is spread sideway from an outer peripheral portion of an upper end of the column 7 and which covers a peripheral portion 2a of the mounting hole 3,
a part mounting portion 5 mounted on the support portion 6 or the column 7,
a pair of engaging pieces 8 and 8 which are extend toward the support portion 6 in a state of being supported respectively on both sides of a tip end of the column 7 in a cantilever manner, and which include tip ends capable of engaging with the peripheral portion 2a of the mounting hole 3, and
engaging steps 9 establishing an attached state in which the pair of engaging pieces 8 and 8 come into slide contact with an inner periphery of the mounting hole 3 by inserting the column 7 into the mounting hole 3, thereby resiliently rocking and deforming the engaging pieces 8 and 8 inward and the attaching subject 2 is sandwiched between the pair of engaging pieces 8 and 8 and the support portion 6, each of the engaging steps 9 including a vertical wall 9t abutting against an inner peripheral surface 3n of the mounting hole 3 in the attaching subject 2, and a lateral wall 9y extending along an outer surface 2A of the peripheral portion 2a of the mounting hole 3 in the attaching subject 2, the engaging steps 9 being formed on outer sides of tip ends of the respective pair of engaging pieces 8 and 8 such that a contained angle of 5° is formed between the lateral wall 9y and the outer surface 2A in an attached state.

According to the present invention, as will be described in detail in an embodiment, it is possible to provide an improved partmounting clamp in which even when an angle edge of the mounting hole on the side where the engaging step is engaged is formed with a burr by the press forming or the like, the engaging step is engaged with the mounting hole and is moved in the predetermined manner by the resilience of the pair of engaging pieces which are forcibly resiliently deformed inwardly so as to pass through the mounting hole together with the inserting operation of the column into the mounting hole, a reliable engaged state can be obtained, it is possible to sufficiently withstand a force in the pulling out direction, it can be held stably. In addition, since the contained angle between the lateral wall of the engaging step and the outer surface of the attaching subj ect in an attached state is set to 5°, the engaging step can be engaged easily and it is difficult for the engaging step to be pulled out from the mounting hole with excellent balance, in case that there is a burr on the edge of the mounting hole. This shows a high effect that it is easy to mount the engaging step, and a stable attached state can be realized.

In the part mounting clamp of the invention, an angle formed between the inner peripheral surface 3n and the outer surface 2A is 90° or about 90°, and the vertical wall 9t and the lateral wall 9y are set such that an angle therebetween is equal to the angle made by adding 90° or about 90° and the contained angle of 5°.

According to the invention, since the angle formed between the inner peripheral surface of the mounting hole and the outer surface of the attaching subject is 90° or about 90°, the angle formed between the vertical wall and the lateral wall of the engaging step may be set to 90° or about 90° plus 5°.

In the part mounting clamp of the invention, the part mounting portion 5 is an insertion hole formed in the column 7, through which a tying band B for tying wire harness W is inserted.

According to the invention, the part mounting clamp can effectively be used as a harness retaining clamp which ties a wire harness and supports the same on the attaching subject.

### Brief Description of the Drawings

Fig. 1 is a perspective view showing a tying fixing tool in its usage state;
Fig. 2 is a sectional front view of the tying fixing tool shown in Fig. 1;
Fig. 3 is a sectional side view of the tying fixing tool shown in Fig. 1;
Fig. 4 is an enlarged front view showing an engaged state between an engaging piece and a mounting hole;
Fig. 5 is a sectional side view of a tying head having a clamp;
Figs. 6 show the tying head having the clamp, wherein (a) is a front view and (b) is a side view;
Fig. 7 is a bottom view of the tying head having the clamp;
Fig. 8 is an enlarged view of an essential portion showing an engagement starting state of the engaging piece with respect to a panel plate;
Fig. 9 is an enlarged view of an essential portion showing a state in which the engaging step is engaged with the panel plate;
Fig. 10 is an enlarged view of an essential portion showing the engaged state between the engaging piece and the mounting hole, wherein (a) shows a case where the panel plate is thin and (b) shows a case where the panel plate is thick;
Fig. 11 is an enlarged view of an essential portion showing an engagement incomplete state between the engaging piece and the panel plate in a conventional part mounting clamp; and
Fig. 12 is an enlarged view of an essential portion showing a state where a burr of the panel plate is caught in the engaging step shown in Fig. 11.

### Description of the Preferred Embodiments

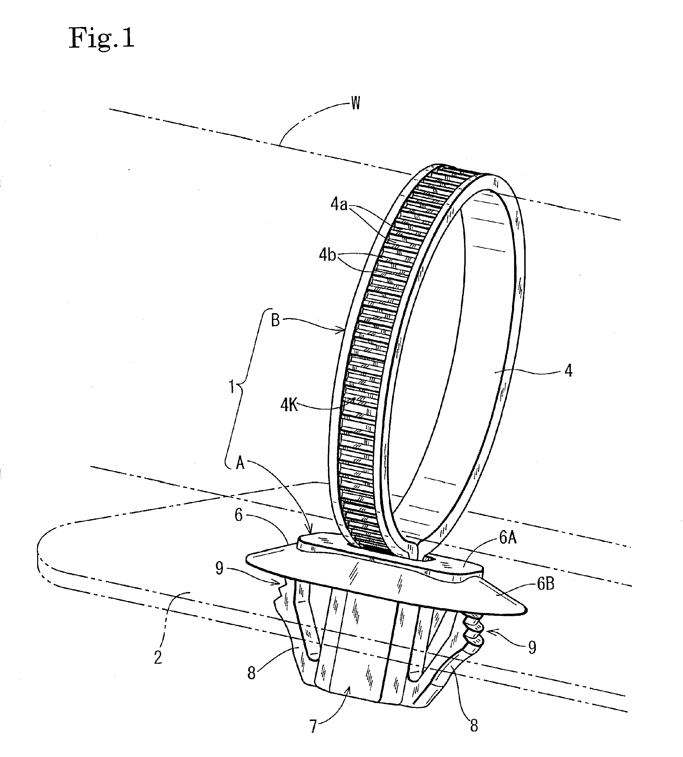

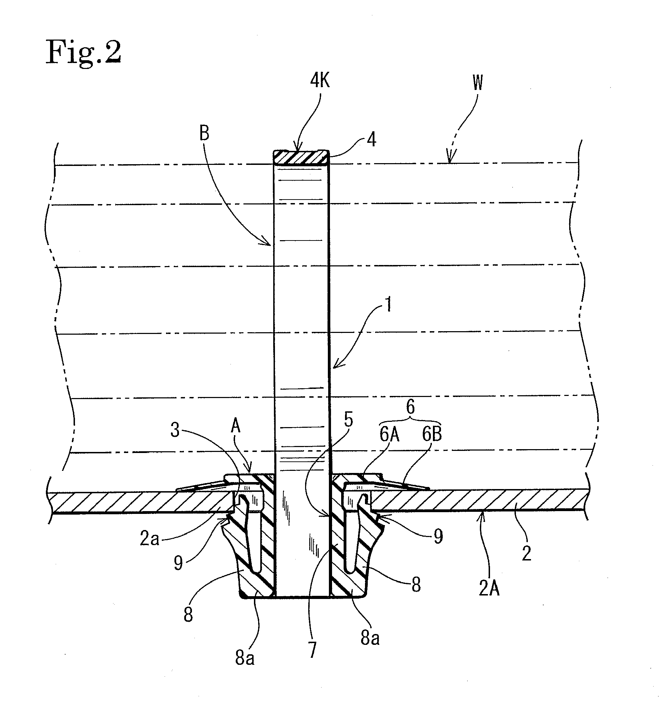

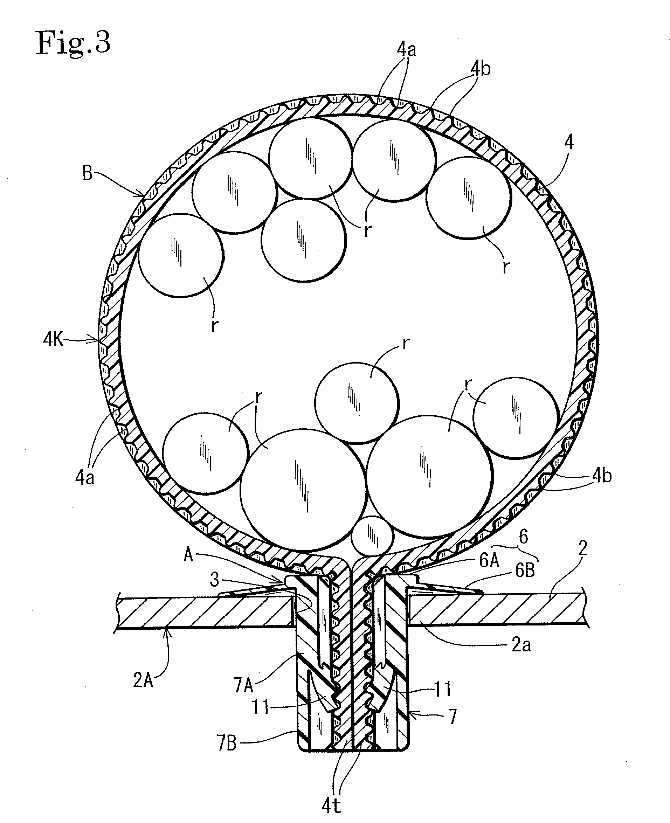

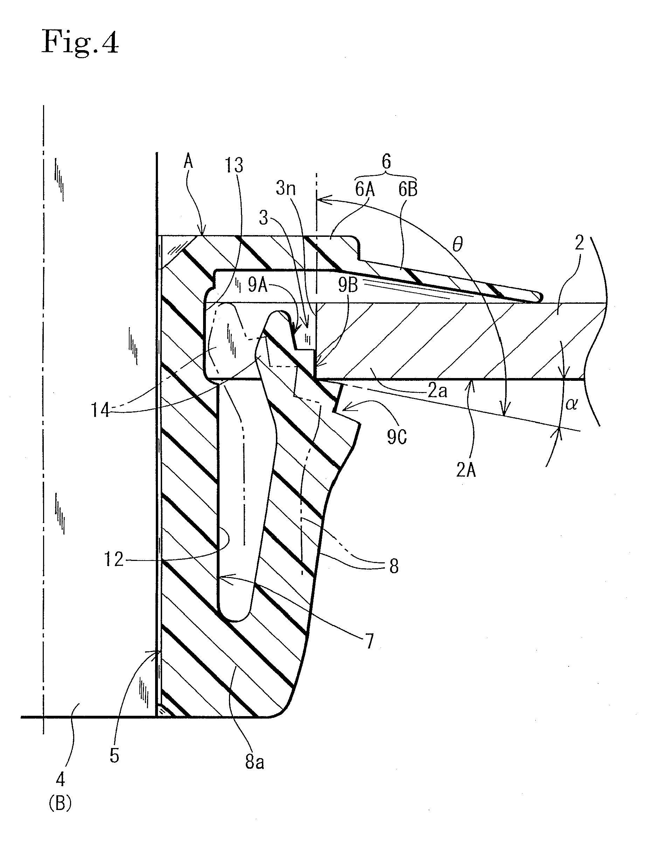

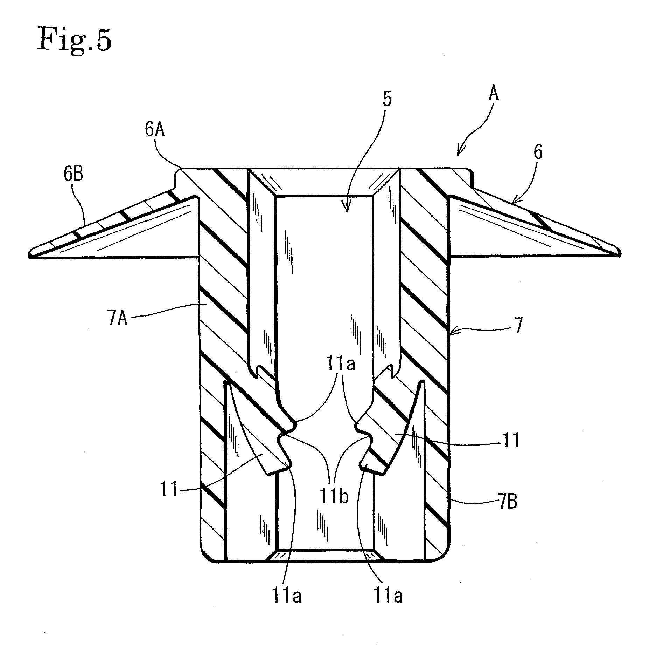

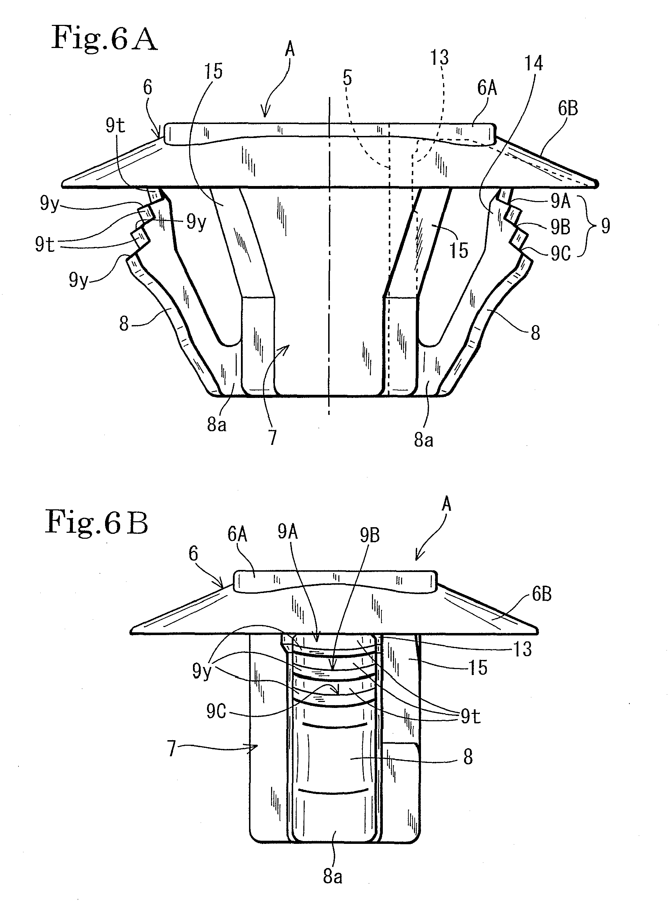

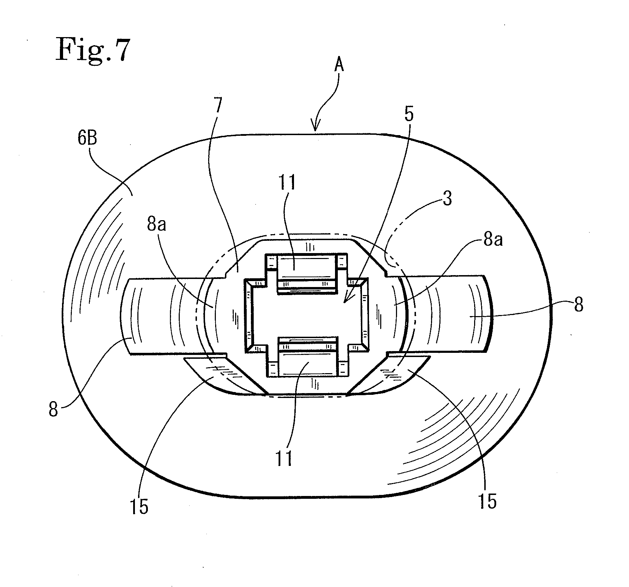

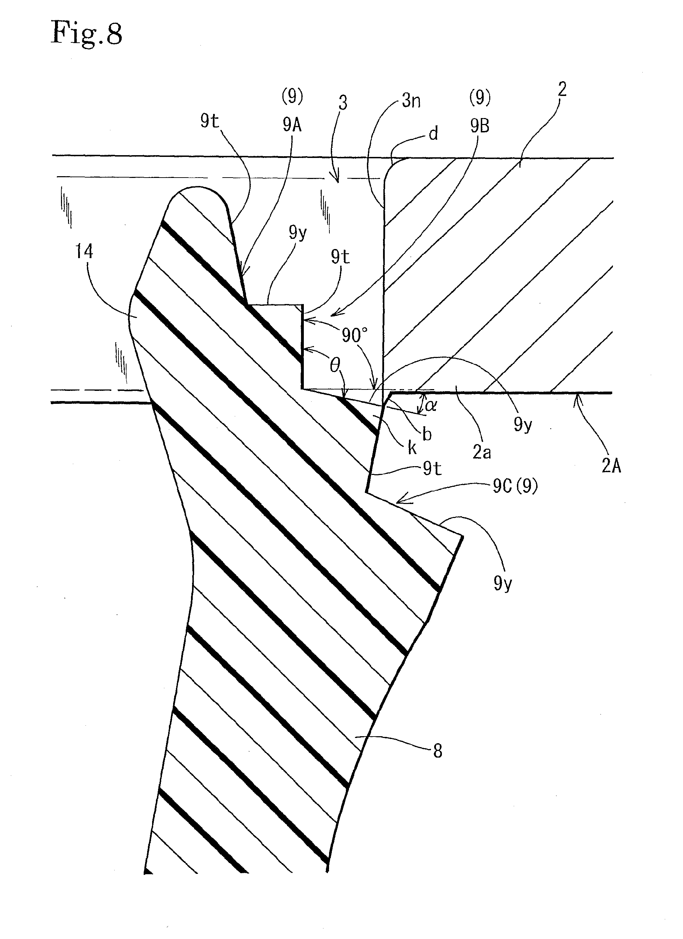

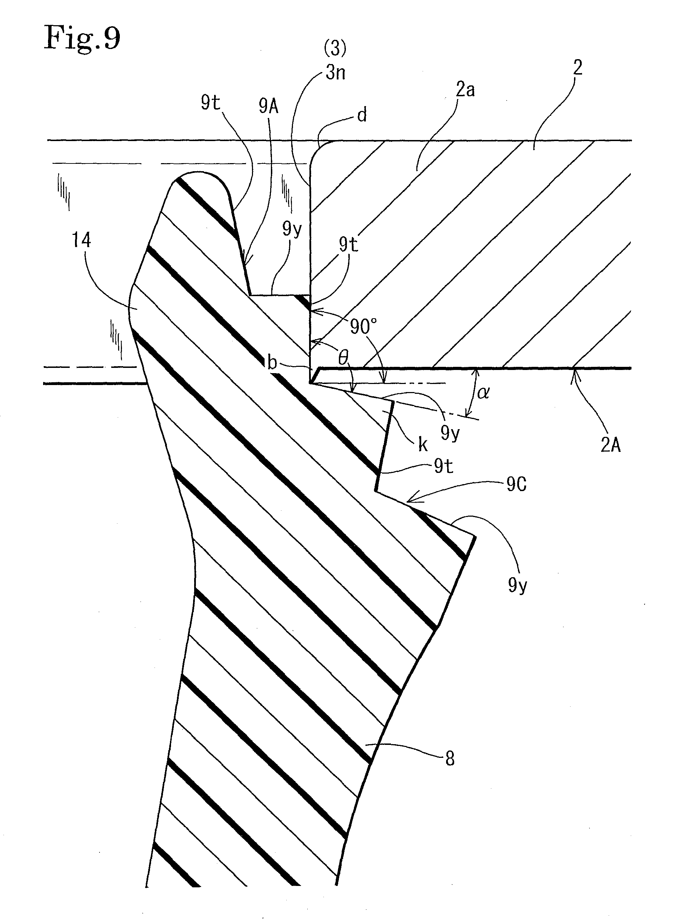

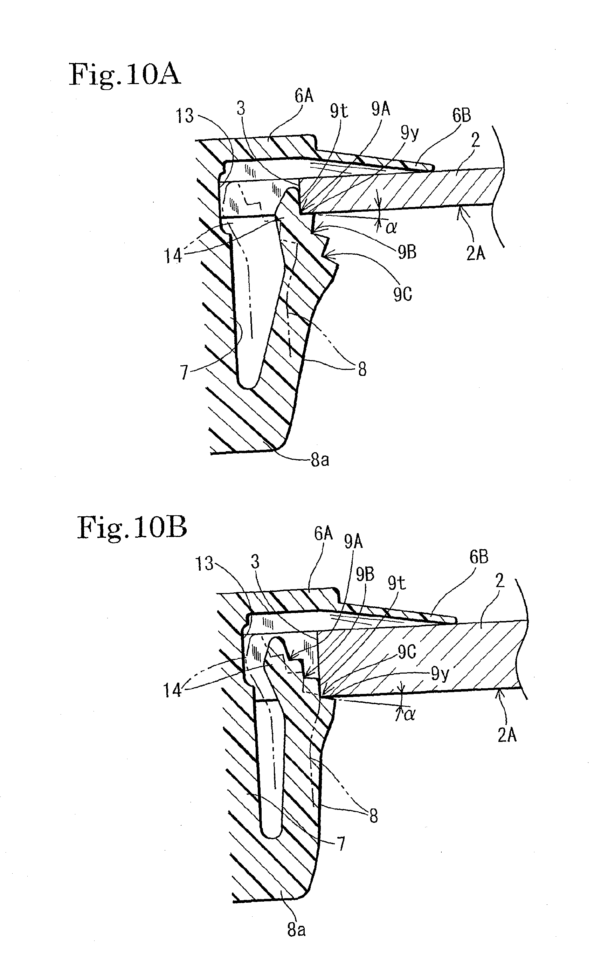

Embodiments of a part mounting clamp according to the present invention will be explained with reference to the drawings. Fig. 1 is a perspective view as a tying fixing tool in which wire harnesses are tied to the part mounting clamp using a tying band. Fig. 2 is a sectional view of the tying fixing tool in a direction along a longitudinal direction of the wire harness. Fig. 3 is a sectional view of the tying fixing tool in a direction perpendicular to the longitudinal direction of the wire harness. Fig. 4 is an enlarged view of an essential portion showing an engaged state between the part mounting clamp and an attaching subject. Fig. 5 is a sectional side view of a discrete part mounting clamp. Figs. 6 and 7 are front, side and bottom views of the part mounting clamp. Fig. 8 is an enlarged sectional view showing the engagement starting state of the engaging step with respect to the mounting hole. Fig. 9 is an enlarged sectional view showing an attached state of the engaging piece to the mounting hole having a burr. Fig. 10 is a sectional view of an essential portion showing an engaged state of the engaging piece with respect to a thin panel plate and a thick panel plate. Figs. 11 and 12 are sectional views of an essential portion showing conventional engagement functions.

### [First Embodiment]

A part mounting clamp according to a first embodiment is constituted as a tying head A having a clamp in a tying fixing tool 1 for tying a wire harness W and clamping the same on an attaching subject 2 in corporation with a tying band B as shown in Fig. 1. That is; a tying fixing tool 1 comprises the tying head A having the clamp and the tying band B. The tying fixing tool 1 ties the wire harness W to a panel plate 2 constituting an automobile body part that is one example of the attaching subject so that the wire harness W can be retained thereto.

Figs. 2 and 3 show a state where the wire harness W is tied and retained to the panel plate 2 using the tying fixing tool 1. The tying fixing tool 1 comprises two parts, i.e., the tying head A having the clamp retained and fixed to the mounting hole 3 of the panel plate, and the tying band B retained and fixed to the tying head A having the clamp in a state where the wire harness W is surrounded. That is, the wire harness W comprising a large number of electric wires r are surrounded by the tying band B and in this state, the wire harness W is retained and fixed to the tying head A having the clamp, and the tying fixing tool 1 having the wire harness W is retained and fixed to the panel plate 2 by the tying head A having the clamp.

As shown in Figs. 1 to 3, the tying band B has a band member 4 made of synthetic resin having flexibility such as nylon and polypropylene, and one of front and rear surface of the band member 4 is formed with valleys 4a and mountains 4b. The valleys 4a and the mountains 4b are alternately formed in the recessed manner. Retaining portions 4K are continuously formed. Although it is not illustrated in the drawings, a band reel wound around a rotation reel is reeled off and supplied, and the supplied reel is cut into appropriate length and is used as the tying band.

As shown in Figs. 5 to 7, the tying head A having the clamp includes a support portion 6, a column 7 and a pair of engaging pieces 8 and 8 . The support portion 6 covers a peripheral portion of a long circular mounting hole 3 formed in a panel plate 2 (one example of the attaching subject) in a state where the support portion 6 has an insertion hole 5 (one example of the part mounting portion) through which the tying band B is to be inserted. The column 7 projects from the support portion 6 and is inserted into the mounting hole 3. The engaging pieces 8 and 8 extend toward the support portion 6 in a state of being supported respectively on both sides of a lower tip end of the column 7 in a cantilever manner, and the engaging piece 8 is formed at its outer side of its upper end with an engaging step 9 which can be engaged with a peripheral portion 2a of the mounting hole 3. The tying head A having the clamp is made of synthetic resin having flexibility such as nylon and polypropylene. If the column 7 is inserted into the mounting hole 3, the pair of engaging pieces 8 and 8 are resiliently rocked and deformed toward the inside by the sliding motion with respect to the inner peripheral surface 3n (or angle edge) of the mounting hole 3 (see Fig. 4), the engaging step 9 is engaged with the mounting hole peripheral portion 2a of the panel plate 2, and the panel plate 2 is sandwiched between the pair of engaging pieces 8 and 8 and the support portion 6, thereby achieving the attached state.

The support portion 6 is formed into a long and circular reversed cup-like shape as viewed from above, and this shape corresponds to that of the mounting hole 3. The support portion 6 comprises a thick central region 6A which is continuous with the upper end of the column 7, and a skirt portion 6B formed around the column 7. The support portion 6 is formed such that it can be resiliently deformed in the vertical direction (inserting direction into the insertion hole 3) so as to urge and sandwich the peripheral portion 2a of the mounting hole 3 between the pair of left and right engaging pieces (one example of the clamp portion) 8 and 8. As viewed from above, the central region 6A of the support portion 6 is formed thicker than a peripheral portion of the support portion 6.

The column 7 is a cylindrical portion through which the insertion hole 5 is formed vertically. The insertion hole 5 has a substantially rectangular shape as viewed from above (as viewed from below). Both ends 4t and 4t of the band member 4 are inserted into the insertion hole 5 in an opposed state. A pair of second engaging pieces 11 and 11 projects downward and inward in the insertion hole 5. The second engaging pieces 11 and 11 are engaged with valleys 4a of the ends 4t and 4t. The second engaging pieces 11 and 11 are supported in the cantilever manner in a state where they are opposed to each other in the longitudinal direction. The second engaging piece 11 is integrally formed such that it is continuous with the thick column portion 7A at a boundary between the upper thick column portion 7A and the lower thin column portion 7B. The second engaging piece 11 is formed at its inner side with two engaging mountains 11a and engaging valleys 11b.

As shown in Figs. 2, 4 and 6, the pair of engaging pieces 8 and 8 are supported in the cantilever manner such that they project diagonally upward from left and right portions of the lower end of the column 7. The engaging piece 8 can laterally be rocked and deformed around a root 8a of the lower end, and the outer side of the upper end of the engaging piece 8 is formed with an engaging step 9 comprising first to third steps 9A to 9C. Each of the steps 9A to 9C comprises a corner angle portion having vertical wall 9t and a lateral wall 9y. The vertical wall 9t is formed into an arc curved surface as viewed from above and this shape corresponds to that of the mounting hole 3. A contained angle θ between the vertical wall 9t and the lateral wall 9y is set to 95°.

More specifically, as shown in Fig. 8, each of the steps 9A to 9C (engaging step 9) includes the vertical wall 9t extending along an inner peripheral surface 3n of the mounting hole 3 of the panel plate 2 and the lateral wall 9y extending along the outer surface (lower surface) of the peripheral portion 2a of the mounting hole 3 of the panel plate 2. In an attached state (shown in Fig. 2) where it is inserted into the mounting hole 3, the engaging step 9 is formed such that a slight gap contained angle α exists between the lateral wall 9y and the outer surface 2A. Here, the contained angle α is set to 5°. In the first embodiment, the contained angle θ formed between the vertical wall 9t and the lateral wall 9y is set to 95°. That is, the angle formed between the inner peripheral surface 3n of the mounting hole 3 and the lower outer surface 2A of the panel plate 2 is right-angled (90° or substantially 90°) . A contained angle (angle) formed between the vertical wall 9t and the lateral wall 9y is set to a value (95°) obtained by adding the gap contained angle α to a right angle (90° or substantially 90°).

The first to third steps 9A to 9C are properly used depending upon the thickness of the panel plate 2. When the panel plate 2 is thin, as shown in Fig. 10 (a), the mounting hole 3 is engaged with the first step 9A, and when the panel plate 2 is thick, as shown in Fig. 10 (b), the mounting hole 3 is engaged with the third step 9C. When the panel plate 2 has standard thickness (intermediate thickness), as shown in Figs. 4 and 9, the mounting hole 3 is engaged with the second step 9B. With any thickness, the size of the mounting hole 3 is the same, and selection of the first to third steps 9A to 9C is adjusted depending upon the magnitude of the rocking deformation of the engaging piece 8 . The engaging piece 8 and the engaging step 9 are formed such that the gap contained angle α becomes 5° irrespective of the thickness.

Next, a state where a tying-requirement terminal A is mounted on the panel plate 2 will be explained. The mounting hole 3 of the panel plate 2 made of sheet metal is usually integrally formed by press forming. Thus, a peripheral edge of the mounting hole 3 on the press punch entering side is formed with "flaggy portion" which is subjected to angle R processing in many cases, and the peripheral edge of the mounting hole 3 on the press punch discharging side with "burr". As shown in Fig. 8, a flaggy portion d is formed on an upper angle portion which is the inserting side of the tying head A having the clamp, and a burr b is formed on a lower angle portion which is a catching side of the engaging piece 8. This case will be explained below.

If the tying head A having the clamp is inserted into the mounting hole 3 from a terminal end side of the column 7, outer side surfaces 8b of the pair of engaging pieces 8 and 8 which are initially set such that they are slightly opened come into slide contact with the upper angle portion of the mounting hole 3, i.e., the flaggy portion d, and the engaging pieces 8 and 8 are further inserted while they are rocked and deformed inward (toward the column 7). Since the panel plate 2 has the standard thickness, the third step 9C which first comes into contact with the lower angle portion of the mounting hole 3 together with the inserting operation passes as it is, and the second step 9B tries to enter as shown in Fig. 8. That is, the angle portion k sandwiched between the lateral wall 9y of the second step 9B and the vertical wall 9t of the third step 9C is caught in the lower end of burr b.

According to the engaging step 9 of the present invention, since the contained angle θ between the vertical wall 9t and the lateral wall 9y is set to 95°, the lateral wall 9y of the second step 9B and the lower outer surface 2A of the panel plate 2 are substantially in parallel to each other or form a slight opening angle (such an angle that the lateral wall 9y inclined downward and rightward with respect to the outer surface 2A in Fig. 8) in a state where the angle portion k comes to a lower end of the burr b. Therefore, the burr b and the lateral wall 9y easily slide and move with respect to each other by the resilience of the engaging piece 8, and such behavior that the second step 9B is engaged with the mounting hole 3 relatively smoothly is provided (see Fig. 9).

Whereas, according to the conventional part mounting clamp, as shown with a phantom line in Fig. 8, the lateral wall 9y and the vertical wall 9t of the second step 9B are set to a right angle (90°). Therefore, if the moving state of the engaging piece 8 is the same as that of the present invention, it can be understood that the vertical height of the burr b can not still move laterally. This is because that it is general that the engaging piece 8 is designed such that in a normal engaging state, the inner peripheral surface 3n of the mounting hole 3 and the vertical wall 9t are in parallel to each other and can be excellently abutted against each other, and for this end, in a state immediately before engagement (shown in Fig. 8), the lateral wall 9y and the lower outer surface 2A form a contained angle (such an angle that the lateral wall 9y inclined upward and rightward with respect to the outer surface 2A in Fig. 8).

In a state where the second step 9B is engaged with the mounting hole 3 in the intended manner, the vertical wall 9t and the inner peripheral surface 3n of the mounting hole 3 are abutted against each other in a surface-surface contact manner as shown in Fig. 9, and they are engaged with each other in a state where the burr b is located on the side of a root of the lateral wall 9y (on the side of the vertical wall 9t). That is, a case in which the burr b is caught in the lateral wall 9y and stopped halfway and the burr is not completely engaged can be avoided, and it is possible to obtain excellent engagement state where the vertical wall 9t abuts against the inner peripheral surface 3n of the mounting hole 3.

For reference, in an attached state when the panel plate 2 is thin, as shown in Fig. 10 (a), the engaging step 9 is formed such that the mounting hole 3 is engaged with the first step 9A and the gap contained angle α between the lower outer surface 2A of the panel plate 2 and the lateral wall 9y of the first step 9A becomes 5 to 6°. In an attached state when the panel plate 2 is thick, as shown in Fig. 10(b), the engaging step 9 is formed such that the mounting hole 3 is engaged with the third step 9C and the gap contained angle α between the lower outer surface 2A of the panel plate 2 and the lateral wall 9y of the third step 9C becomes 5 to 6°.

A value of the contained angle (contained angle θ between two sides) will be considered. It is preferable that the gap contained angle α is large to some extent in view of easiness of engagement movement of the engaging step 9 to the mounting hole peripheral portion 2a caused when the column 7 is inserted into the mounting hole 3. However, if the gap contained angle α becomes large, component of force for rocking the engaging piece 8 inward by the gap contained angle α is generated when the tensile force in a direction pulling out the wire harness W or the tying head A having the clamp is applied, and there is a problem that the engaging piece 8 is prone to be pulled out from the mounting hole 3. Thus, it is not preferable to increase the gap contained angle α so much. Therefore, it can be said that it is preferable that the gap contained angle α is as small as possible for stably holding as a clamp in a range where the engaging step 9 can be engaged with the mounting hole 3 even if the burr b is generated.

Hence, the height (projecting amount) of the burr b when a mounting hole 3 having general size (about 10mm) was formed on the panel plate 2 having standard thickness (about 1mm) by the press forming was checked, and it was found that the height was about 0.2 to 0.3mm (average value) . Thus, in an engagement starting state shown in Fig. 8, in order to set the lateral wall 9y substantially in parallel to the outer surface 2A of the panel plate 2 in view of easiness of lateral slide movement of the engaging piece 8, if the gap contained angle α calculated from various conditions such as the height of the burr b and the length of the lateral wall 9y is set to within a range of 4 to 10°, it is possible to satisfy the two elements, i.e., the "easiness of engagement" and "sufficient pulling out proof stress" to some degrees. If the range of the gap contained angle α is set to 5°, the easiness of engagement between the engaging step 9 and the mounting hole peripheral portion 2a and the pulling out difficulty from the mounting hole 3 can be balanced excellently (easy to engage but difficult to pull out). That is, the optimal value of α is 5°.

As shown in Figs. 4, 6 and 10, recessed portions 13 for facilitating the inward resilient deformation of the engaging piece 8 are formed in upper portions of the left and right side walls 12 and 12 of the column 7. That is, as the column 7 is inserted into the insertion hole 3, the left and right engaging pieces 8 and 8 come slid contact with the inner peripheral surface 3n and resiliently deform inward, but in a state where the engaging pieces 8 and 8 are deformed most inward to pass through the insertion hole 3 (shown with phantom line in Fig. 4), the tip end inner portion 14 enters the recessed portion 13.

That is, the tip end inner portion 14 temporarily enters inward more than the outlines of the left and right side walls 12 of the column 7 so that the movable range of rocking movement of the engaging piece 8 is increased inward. As shown with phantom lines in Figs. 10, this function is likewise exhibited even when the panel plate 2 is thin (see Fig. 10(a)) and when the panel plate 2 is thick (Fig. 10 (b)) . However, to compensate the deterioration of strength at the root portion of the column 7 caused by forming the recessed portion 13, as shown in Figs. 6 and 7, reinforcing walls 15 which project laterally in a form of a triangle are integrally formed on a front or rear portions of the recessed portions 13 in the upper portions of left and right side walls 12 of the column 7, and the column 7 and the support portion 6 are integrally formed with sufficient strength.

In such a structure, even when the general and convenient engaging piece 8 is provided at its tip end with the large engaging step 9 having the three steps, i.e., the first to third steps 9A to 9C, it is possible to increase the inward movable rocking range due to the existence of the recessed portion 13 so that it is unnecessary to increase the mounting hole 3 in size. In other words, it is possible to realize the tying head A having the clamp having excellent usage and being capable of attaching in correspondence with various thicknesses of the panel plate 2 and capable of increasing the number of the engaging steps of the engaging step 9 while still using the defined shape and size such as a long circular shape.

As the part mounting clamp A, it is possible to use not only the tying head having the clamp, but also various members such as a tying band having a clamp in which a base portion of the tying band is integrally formed on the tying head having the clamp, and a support metal tool mounting clamp having a nut for bolting a holding metal tool of a high pressure electric wire. It is possible to variably change the attaching subject to a plate forming a body of a vehicle, agricultural machinery, constructionmachinery and the like, and a frame of the industrial machinery.

## Claims

1. A part mounting clamp comprising:
a column inserted into a mounting hole formed in an attaching subject,
a support portion which is spread sideway from an outer peripheral portion of an upper end of the column and which covers a peripheral portion of the mounting hole,
a part mounting portion mounted on the support portion or the column,
a pair of engaging pieces which are extend toward the support portion in a state of being supported respectively on both sides of a tip end of the column in a cantilever manner, and which include tip ends capable of engaging with the peripheral portion of the mounting hole, and
engaging steps establishing an attached state in which the pair of engaging pieces come into slide contact with an inner periphery of the mounting hole by inserting the column into the mounting hole, thereby resiliently rocking and deforming the engaging pieces inward and the attaching subject is sandwiched between the pair of engaging pieces and the support portion, each of the engaging steps including a vertical wall abutting against an inner peripheral surface of the mounting hole in the attaching subject, and a lateral wall extending along an outer surface of the peripheral portion of the mounting hole in the attaching subject, the engaging steps being formed on outer sides of tip ends of the respective pair of engaging pieces such that a contained angle of 5° is formed between the lateral wall and the outer surface in the attached state.

2. The part mounting clamp according to claim 1, wherein the part mounting clamp includes the vertical wall and the lateral wall; an angle formed between the inner peripheral surface and the outer surface is 90° or about 90°; and the vertical wall and the lateral wall are set such that an angle therebetween is equal to the angle made by adding 90° or about 90° and the contained angle of 5°.

3. The part mounting clamp according to claim 1, wherein the part mounting clamp includes the part mounting portion which is an insertion hole formed in the column, through which a tying band for tying wire harness W is inserted.
